# EUROPÄISCHE PATENTSCHRIFT

(11) **EP 1 338 554 B1**
(45) Veröffentlichungstag und Bekanntmachung des Hinweises auf die Patenterteilung: **01.09.2004**
(21) Anmeldenummer: 02004189.3
(22) Anmeldetag: 26.02.2002
(51) Int. Cl.: C01B 3/00, F17C 11/00, F28D 20/00, F17C 13/02

(54) **Vorrichtung zum Beladen und Entladen von in einem Speichermedium aufnehmbarem Wasserstoff**
Apparatus for storing hydrogen in a storage medium and releasing it
Appareil pour le chargement et le déchargement de l'hydrogène contenu dans un matériau de stockage

(43) Veröffentlichungstag der Anmeldung: 27.08.2003
(73) Patentinhaber: GKSS-Forschungszentrum Geesthacht GmbH, 21502 Geesthacht (DE)
(72) Erfinder: Klassen, Thomas Dr., 21033 Hamburg (DE); Bormann, Rüdiger Prof., 21224 Rosengarten (DE); ANDERS, Dietrich, D-21502 Geesthacht (DE)
(74) Vertreter: Niedmers, Ole, Dipl.-Phys.

(56) Entgegenhaltungen:
- EP-A- 0 995 944
- US-A- 6 015 041
- PATENT ABSTRACTS OF JAPAN vol. 1999, no. 08, 30. Juni 1999 (1999-06-30) & JP 11 072200 A (SANYO ELECTRIC CO LTD), 16. März 1999 (1999-03-16)
- PATENT ABSTRACTS OF JAPAN vol. 1995, no. 11, 26. Dezember 1995 (1995-12-26) -& JP 07 208696 A (MAZDA MOTOR CORP), 11. August 1995 (1995-08-11)

## Beschreibung

Die Erfindung betrifft eine Vorrichtung zum Beladen und Entladen von im einem Speichermedium, insbesondere in Form eines Metallhydrids, aufnehmbarem Wasserstoff, wobei dem Speichermedium für den Beladevorgang mit Wasserstoff Wärme entzogen und für den Entladevorgang des Wasserstoffs Wärme zugeführt wird.

Speicher, die in der Lage sind, mit Wasserstoff beladen zu werden und bei Bedarf befähigt sind, den geladenen bzw. gespeicherten Wasserstoff wieder abzugeben, sind beispielsweise Metallhydride. Es sind aber auch andere Wasserspeicher bekannt. Die hohe Reaktionskinetik von Wasserstoff mit Metallhydriden kann allerdings im technischen Einsatz nur dann voll zur Geltung kommen, wenn die während der Hydridbildung freigesetzte Wärme bzw. die zur Wasserstoffabgabe benötigte Energie genügend schnell ab- bzw. zugeführt werden kann. Gelingt der erforderliche Wärmetransport nicht in ausreichendem Maße, so kommt der Prozeß der Hydridbildung oder -zersetzung zum Stillstand.

Bisherige Vorrichtungen der eingangs genannten Art arbeiten nach unterschiedlichen Konzepten. So sind Vorrichtungen mit sogenanntem äußeren Wärmeaustausch bekannt, bei denen sich das Metallhydrid in Behältern befindet, die sich in einer zweiten Umhüllung befinden, die von einem Wärmemedium durchströmt werden. Dieses Medium dient in einem Kühl- bzw. Heizkreislauf zum Transport von Wärme zwischen dem Metallhydrid und einer Wärmesenke (Kühler) bzw. einer Wärmequelle (beispielsweise einem Verbrennungsmotor oder einer Brennstoffzelle). Für Fälle, bei denen die Mantelfläche des das Metallhydrid aufnehmenden Behälters als wärmeübertragende Fläche nicht ausreicht, werden auch Speicher mit innerem Wärmetausch eingesetzt. Dabei sind zum Beispiel metallische Rohre innerhalb des Behälters angeordnet. Das diese Rohre durchströmende Medium transportiert wie im ersten Fall die Wärme in der gewünschten Richtung

Die im Stand der Technik bekannten beiden unterschiedlichen Lösungsansätze, d.h. mit äußerem bzw. innerem Wärmeaustausch, haben den Nachteil, daß der Kreislauf des Mediums (Wärmeträgerkreislauf) erheblich zur Masse und zum Volumen des Gesamtsystems bzw. der Vorrichtung beiträgt. Dieses wirkt sich insbesondere bei mobilen Anwendungen sehr nachteilig auf den Gesamtwirkungsgrad einer derartigen Vorrichtung bzw. eines derartigen Systems aus, wozu insbesondere auch noch benötigte Umwälzpumpen bzw benötigte Gebläse und verhältnismäßig große Wärmeträgermengen beitragen. Ein weiterer Nachteil der bisher bekannten Lösungen besteht darin, daß sie hinsichtlich der Konstruktion, des Werkstoffs und der Herstellung verhältnismäßig aufwendig sind.

Es ist somit Aufgabe der vorliegenden Erfindung eine Vorrichtung der eingangs genannten Art zu schaffen, die eine effektive Wärmeübertragung zwischen dem Speichermedium und dem Medium für die Zufuhr von Wärme und die Abfuhr von Wärme in das Speichermedium bzw. aus dem Speichermedium heraus gestattet, die ein geringes Gewicht und ein geringes Volumen bei dennoch hohem thermischen Wirkungsgrad sowie eine hohe Betriebssicherheit gestattet, wobei die Vorrichtung einfach aufgebaut sein soll und geringe Herstellungskosten zu ihrer Realisierung angestrebt werden.

Gelöst wird die Aufgabe gemäß der Erfindung dadurch, daß wenigstens ein mit einem Wärmeleitungsmedium gefülltes, dem Wärmetransport dienendes geschlossenes Element zu einem Teil in wärmeleitendem Kontakt mit dem Speichermedium und zu einem Teil in wärmeleitendem Kontakt mit dem Übertragungsbereich für den Entzug und die Zuführung von Wärme steht.

Der Vorteil der erfindungsgemäßen Lösung besteht im wesentlichen darin, daß mittels dieser eine außerordentlich hervorragende Wärmeübertragungsmöglichkeit zwischen dem Speichermedium und dem Ort des Entzuges bzw. der Zuführung von Wärme (Wärmeübertragungsort) geschaffen wird und dadurch signifikant hohe Wasserstoffbeladungs- und entladungsgeschwindigkeiten erreicht werden. Neben den hohen Beladungs- und Entladungsgeschwindigkeiten wird durch die an sich konstruktiv einfache, aber sehr effektive Lösung gegenüber bisherigen Vorrichtungen dieser Art eine Verringerung der Masse und des Volumens der Vorrichtung erreicht und gleichzeitig, wie angestrebt, eine signifikante Erhöhung des Wirkungsgrades und der Betriebssicherheit gegenüber bekannten Systemen, zumal durch die erfindungsgemäße Lösung eine sehr kompakte Bauweise der Vorrichtung möglich ist. Daraus ergibt sich auch die Möglichkeit, die gesamte Vorrichtung auf verhältnismäßig einfache Weise thermisch gegen die Umgebung zu isolieren, so daß ein unerwünschter Wärmeaustausch minimiert wird. Im Wärmeübertragungselement, nachfolgend kurz Element genannt, liegt das Wärmetransportmedium in flüssigem und dampfförmigem Aggregatzustand vor.

Gemäß einer vorteilhaften Ausgestaltung der Vorrichtung weist das Element an seiner Innenoberfläche eine kapillarartige Struktur auf, wodurch die Innenoberfläche des Elements sehr stark vergrößert wird, so daß der Wärmeaustausch mit dem im Element befindlichen, eingeschlossenen flüssigen Medium, beispielsweise Alkohol, optimiert werden kann, der die gesamte, durch die kapillarartige Struktur extrem vergrößerte Innenoberfläche des Elements benetzt.

Das Element selbst ist vorteilhafterweise aus einem sehr gut wärmeleitfähigen Werkstoff aufgebaut, beispielsweise vorteilhafterweise aus Kupfer und/oder Aluminium und/ oder seinen Legierungen. Auch die gezielte Auswahl des das Element bildenden Werkstoffs trägt zur Optimierung des Wärmeübergangs in beiden Richtungen bei.

Die Anordnung des Elementes relativ zum Speichermedium kann auf verschiedene geeignete Weise vorgenommen werden, wobei dabei auch der Aufbau des Speichermediums im Sinne seiner konstruktiven Anordnung einen Rolle spielt. So ist es beispielsweise vorteilhaft, insbesondere wenn das Speichermedium in Form eines quaderförmigen, zylindrischen oder dergleichen aufgebauten Formkörpers realisiert ist, das Element mit dem Teil, mit dem es in wärmeleitendem Kontakt mit dem Speichermedium steht, im wesentlichen längs des Mediums anzuordnen, beispielsweise im Bereich angrenzend unmittelbar an eine das Speichermedium einfassende Umhüllung. Grundsätzlich ist es aber auch möglich, das Element quer zur Längsausdehnung des Speichermediums anzuordnen. Es sei darauf hingewiesen, daß das Speichermedium in der Regel nicht als fester Körper vorliegen muß. Vielmehr kann es auch in Form von Pulver oder Pellets in einem gasdichten Gehäuse ausgebildet sein.

Vorteilhaft kann es ebenfalls sein, das Element mit dem Teil, mit dem es in wärmeleitendem Kontakt mit dem Speichermedium steht, am Außenbereich des Speichermediums anzuordnen, wobei bei dieser Ausgestaltung der Vorrichtung der Wärmeaustausch gegebenenfalls über die das Speichermedium umgebende Umhüllung, wenn sie vorgesehen ist, erfolgen muß.

Bei einer anderen vorteilhaften Ausgestaltung der Vorrichtung ist das Element mit dem Teil, mit dem es in wärmeleitendem Kontakt mit dem Speichermedium steht, im Innenbereich des Speichermediums angeordnet, und dabei bevorzugt im Zentralbereich des Speichermediums, so daß durch diese Anordnungen eine optimale Wärmeverteilung bzw. ein optimaler Wärmetransport in das Speichermedium hinein bzw. aus ihn heraus erfolgen kann.

Bei einer noch anderen vorteilhaften Ausgestaltung der Vorrichtung ist das Element als doppelwandiges Rohr ausgebildet, wobei in dem geschlossenen Raum zwischen den beiden Rohrwandungen das Wärmetransportmedium aufgenommen wird. Bei dieser Ausgestaltung der Vorrichtung wirkt das Element nicht nur als Wärmeübertragungseinheit sondern auch als Umhüllung des Speichermediums, insbesondere dann, wenn das derart ausgestaltete Element vorzugsweise das Speichermedium mit dem Teil, mit dem es mit diesem in wärmeleitendem Kontakt steht, im wesentlichen umschließt. Eine gesonderte Umhüllung, die quasi als Gehäuse für das Speichermedium vorgesehen werden müßte, ist bei dieser Ausgestaltung entbehrlich, da das Element, ausgebildet als doppelwandiges Rohr, in diesem Falle ebenfalls die Funktion eines Gehäuses übernimmt.

Um die Wärmeübertragungsfähigkeit noch weiter zu verbessern, weist gemäß einer noch anderen vorteilhaften Ausgestaltung der Vorrichtung das Element an dem Teil, mit dem es in wärmeleitendem Kontakt mit dem Übertragungsbereich für den Entzug und die Zuführung von Wärme steht, wenigstens ein flächenvergrößerndes Element auf, das beispielsweise in Form einer Mehrzahl von sternförmig angeordneten flügelartigen Flächen ausgebildet sein kann.

Gleiches gilt schließlich vorteilhafterweise dann, wenn das Element an dem Teil, mit dem es in wärmeleitendem Kontakt mit dem Speichermedium steht, wenigstens ein flächenvergrößerndes Element aufweist.

Die Erfindung wird nun unter Bezugnahme auf die nachfolgenden schematischen Zeichnungen anhand eines Ausführungsbeispieles im einzelnen beschrieben. Darin zeigen:
- Fig. 1a: einen schematischen Schnitt durch eine Vorrichtung gemäß der Erfindung, wobei zur Verbesserten Darstellung nur ein zylindrisch ausgeformtes Speichermedium dargestellt ist,
- Fig. 1b: einen schematischen Schnitt entlang der Linie A-B von Fig. 1a,
- Fig. 2: einen schematischen Schnitt durch die Vorrichtung gemäß Fig. 1, bei der die Elemente im Gehäuse der Speichermedien angeordnet sind,
- Fig. 3: einen Schnitt entlang der Linie A-B von Fig. 1, bei dem in modifizierter Form die Elemente im Innenbereich bzw. im Zentrum der der Speichermedien angeordnet sind, und
- Fig. 4: einen Schnitt entlang der Linie A-B von Fig. 1, bei dem in modifizierter Form die Elemente als doppelwandige Rohre ausgebildet sind, die die Speichermedien gehäuseförmig umschließen.

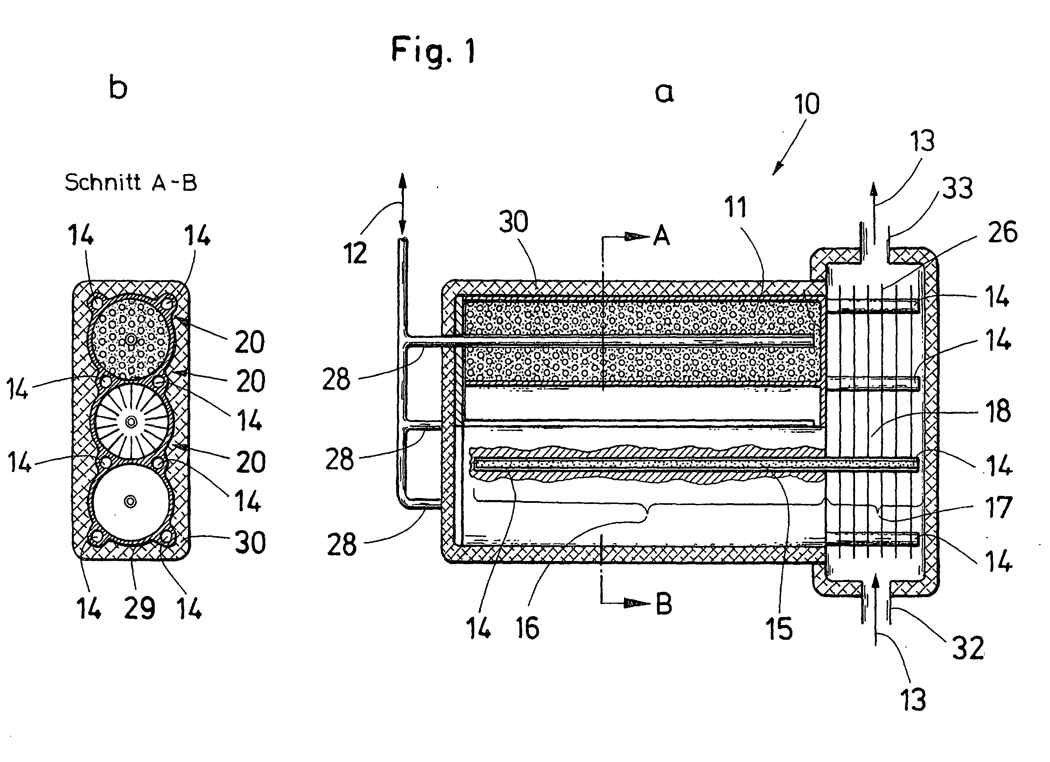

Es wird zunächst Bezug genommen auf Fig. 1, in der im Schnitt und stark schematisierter Form eine Vorrichtung 10 zum Be- und Entladen von in einem Speichermedium, beispielsweise in Form eines Metallhydrids, aufnehmbarem Wasserstoff gezeigt ist. Da derartige Speichermedien, insbesondere solche in Form von Metallhydriden und deren Lade- und Entladekinetik, bekannt sind, wird an dieser Stelle darauf nicht weiter eingegangen. Bei der hier dargestellten Ausgestaltung der Vorrichtung ist das Speichermedium 11 im wesentlichen in Form eines Stabes mit zylindrischem Querschnitt dargestellt, durch den im wesentlichen axial eine Leitung 28 hindurchgeht, über die Wasserstoff 12 in das Speichermedium 11 während des Beladevorgangs eingegeben wird und Wasserstoff 12 während des Entladevorganges ausgegeben wird und zwar beispielsweise an einen hier nicht dargestellten Verbraucher. Der Wasserstoff 12, der im Speichermedium 11 aufgenommen wird, wird durch hier ebenfalls nicht dargestellte Mittel erzeugt, die im Stand der Technik bekannt sind und somit hier nicht weiter erläutert zu werden brauchen. Das Speichermedium kann aber auch, beliebig geeignet geformt, als Pulver oder in Form von Pellets ausgebildet sein.

Das Speichermedium 11, das bei der Ausgestaltung der Vorrichtung 10 gemäß den Figuren 1a und 1b auf drei Einheiten verteilt ist, soll hier die Bedeutung haben, daß es an sich eine beliebige geeignete Form aufweisen kann. Bei der in den Fig. 1a und 1b dargestellten Ausgestaltung der Vorrichtung 10 ist das Speichermedium 11, wie gesagt, in Form eines zylindrischen Körpers ausgebildet, es sind aber auch andere Formen denkbar. Längs des Speichermediums 11 ist eine Mehrzahl von Elementen 14 angeordnet, vergleich insbesondere auch die Fig. 1b, und zwar im Gehäuse 29 des Speichermediums 11. Die Elemente 14 müssen nicht symmetrisch um das Speichermedium 11 herum angeordnet sein, wie es beispielsweise in Fig. 1b dargestellt ist. Vielmehr können die Elemente 14 wahlweise um das Speicherelement herum angeordnet sein, und zwar mit der Maßgabe, daß sie in einem optimalen thermischen Kontakt mit dem Speichermedium 11 treten können. Die Elemente 14 bestehen aus zwei Abschnitten bzw. Teilen 16, 17. Teil 16 des Elements 14 steht in wärmeleitendem Kontakt mit dem Speichermedium 11. Teil 17 steht in wärmeleitendem Kontakt mit einem kärmeübertragungsbereich 18. Das rohrförmige Element 14 ist hermetisch geschlossen und mit einem flüssigen Medium 15, beispielsweise in Form von Alkohol, gefüllt. Das Element 14 weist an seinen Innenoberflächen 19, aufgrund des Maßstabes hier nicht darstellbar, eine kapillarartige Struktur auf, so daß die Innenoberfläche extrem vergrößert ist. Die in den Fig. 1a und 1b dargestellte Ausgestaltung der Vorrichtung 10 sieht ein, das im wesentlichen zylindrisch aber auch in eines beliebigen anderen geeigneten Form ausgebildet sein kann, Gehäuse 29 für jedes Speichermedium 11 vor. Die Gesamtheit aller Gehäuse 29 ist mit einer geeigneten Isolation 30 umgeben, so daß ein thermischer Austausch zwischen dem Speichermedium 11 und der Umgebung, in der die Vorrichtung 10 angeordnet ist, minimiert ist.

Der Übertragungsbereich 18, in Fig. 1a rechts dargestellt, ist faktisch als rohrförmiges Durchgangsgebilde ausgestaltet, so daß ein Wärmemedium 13 in einen Einlaß 32 des Übertragungsmediums eingegeben werden kann, wobei das Wärmemedium 13 längs dem Teil 17 des Elementes 14 streicht, die in den Übertragungsbereich 18 für die Wärme 13 hineinragen. Das Wärmemedium 13 verläßt dann den Übertragungsbereich 18 über den Auslaß 33. In Wärmeübertragungsbereich 18 überträgt das Wärmemittel 13 Wärme auf die Elemente 14, welche sie in die Speichermedien 11 übertragen. Umgekehrt wird den Speichermedien 11 Wärme entzogen, und zwar durch entsprechend niedrig temperiertes Wärmemedium 13, so daß auf gleiche Weise der Wärmetransport von den Speichermedien 11 zum Übertragungsbereich 18 erfolgen kann.

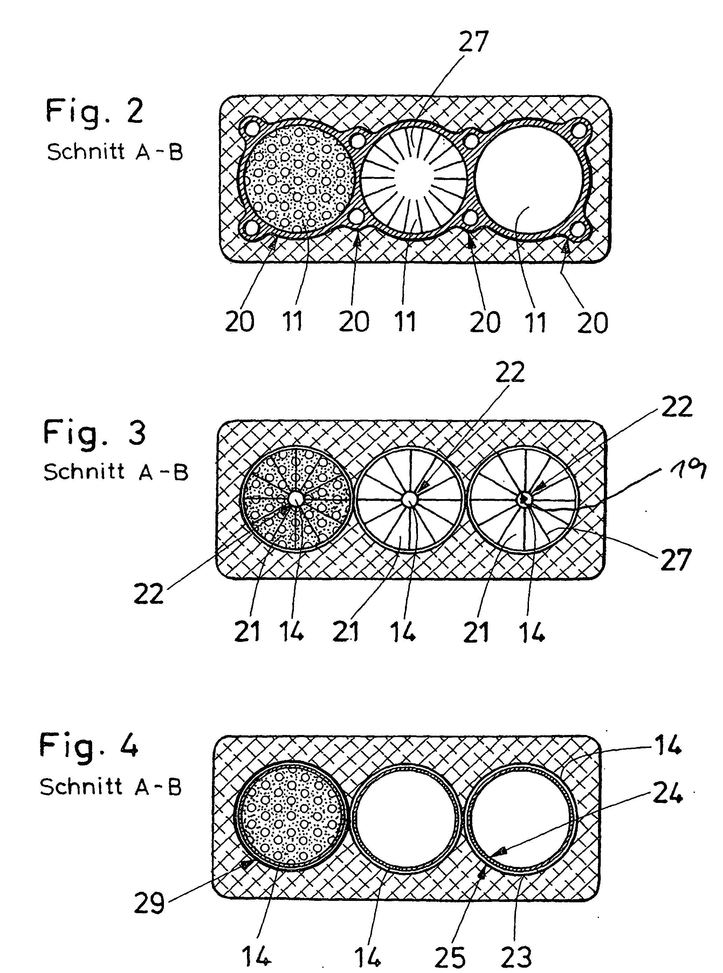

Auch bei den in den Fig. 2 bis 4 dargestellten Schnitten längs der Linie A-B von Fig. 1a findet der Wärmetransport in das Speichermedium 11 hinein bzw. aus diesem heraus statt. Aus Übersichtlichkeitsgründen sind in den Fig. 2 bis 4 die mittleren und rechten Speichermedien 11 nicht differenzierter dargestellt, wie es in den jeweils links angeordneten Speichermedien 11 vorgenommen worden ist. Substantiell können aber alle Speichermedien 11 von identischem Aufbau sein.

In Fig. 2 ist in der Mitte eine Speichergehäuseausführung dargestellt, das eine Mehrzahl von radial angeordneten flächenvergrößernden Elementen 27 zeigt. Diese flächenvergrößernden Elemente 27 dienen dazu, die Wärme aus dem Gesamtquerschnitt des Speichermediums 11 zu den Rändern zu leiten, wodurch der Wärmetransport verbessert wird.

Das gleiche Prinzip des verbesserten Wärmetransports ist bei der Ausgestaltung der Vorrichtung 10 gemäß Fig. 3 ersichtlich, bei der das Element 14 im inneren des Speichermediums 11, hier sogar im Zentralbereich 22, angeordnet ist. Zur Verbesserung der Wärmeübertragung ist das Element 14 mit flächenvergrößernden Mitteln 27 versehen. Das Element 14 kann beispielsweise rohrförmig ausgebildet sein. Es kann aber grundsätzlich jede beliebige geeignete geometrische Struktur aufweisen, d.h. auch in bezug auf seine Längen- und Breitenausbildung und auch in bezug auf seinen Querschnitt.

Bei der Ausgestaltung der Vorrichtung 10 gemäß Fig. 4 ist das Element 14 in Form eines doppelwandigen Rohres ausgebildet, d.h. mit einer äußeren Rohrwand 25 und einer inneren Rohrwand 24, wobei zwischen beiden Rohrwandungen 24, 25 das für den Wärmetransportmedium 15 angeordnet ist. Auch hier weisen die Innenoberflächen der Rohrwandungen 24, 25 zur Vergrößerung ihrer benetzbaren Innenoberflächen eine kapillare Struktur auf (nicht dargestellt). Bei der Ausführungsform der Vorrichtung 10 gemäß Fig. 4 bildet das Element 14 das Gehäuse 29 der jeweiligen darin aufgenommenen Speichermedien 11.

Dem Speichermedium 11, hier in Form eines Metallhydrids, wird für den Beladevorgang mit Wasserstoff 12 über die Rohre 28, die entweder porös ausgebildet sind oder eine Vielzahl von Öffnungen aufweisen, durch die der Wasserstoff in das Speichermedium 11 eindringen kann, Wasserstoff zugeführt. Für eine hohe ßeladekinetik ist es erforderlich, daß dem Speichermedium eine ausreichende Wärmemenge entzogen wird. Dazu wird das geeignet temperierte Wärmemedium 13 auf oben beschriebene Weise über den Teil 17 des Elements 14 geleitet, der in den Obertragungsbereich 18 hineinragt. Da bei der Reaktion des Wasserstoffs 12 im Metallhydrid Wärme entsteht, muß diese Wärme abgeführt werden. Das flüssige Medium 15 im Element verdampft dadurch, wobei der Dampf innerhalb des Elementes 14 zum kälteren Teil 17 hin, der durch geeignete Wahl der Temperatur des Wärmemediums 13 auf ausreichend niedriger Temperatur gehalten wird, unter Abgabe der Verdampfungswärme als flüssiges Medium kondensiert. Für den Entladevorgang der Vorrichtung 10, d.h. bei Entnahme des Wasserstoffes 12, wird Wärme 13 entsprechend zugeführt, wobei der voraufgeführte Wärmetransportschritt dann in Richtung des Teils 16 des Elementes 14 stattfindet, mit dem dieses in wärmeleitendem Kontakt mit dem Speichermedium 11 steht.

### Bezugszeichenliste

- 10.: Vorrichtung
- 11: Speichermedium
- 12: Wasserstoff
- 13: Wärme/Entzug/Zufuhr
- 14: Wärmeübertragungselement
- 15: Wärmetransportmedium
- 16: Teil (wärmeleitender Kontakt mit dem Speichermedium)
- 17: Teil (wärmeleitender Kontakt mit dem Wärmeübertragungsbereich
- 18: Übertragungsbereich
- 19: Innenoberfläche des Elements
- 20: Außenbereich (Speichermedium)
- 21: Innenbereich (Speichermedium)
- 22: Zentralbereich (Speichermedium)
- 23: Raum
- 24: Rohrwandung
- 25: Rohrwandung
- 26: flächenvergrößerndes Element
- 27: flächenvergrößerndes Element
- 28: Rohr
- 29: Gehäuse
- 30: Isolation
- 31 32: Einlaß
- 33: Auslaß

## Patentansprüche

1. Vorrichtung zum Beladen und Entladen von in einem Speichermedium, insbesondere in Form eines Metallhydrides, aufnehmbarem Wasserstoff, wobei dem Speichermedium für den Beladevorgang mit Wasserstoff Wärme entzogen und für den Entladevorgang des Wasserstoffs Wärme zugeführt wird, **dadurch gekennzeichnet, daß** wenigstens ein mit einem Wärmetransportmedium (15) gefülltes, dem Wärmetransport dienendes geschlossenes Wärmeübertragungselement (14) zu einem Teil (16) in wärmeleitendem Kontakt mit dem Speichermedium (11) und zu einem Teil (17) in wärmeleitendem Kontakt mit einem Übertragungsbereich (18) für den Entzug und die Zuführung von Wärme (13) steht.

2. Vorrichtung nach Anspruch 1, **dadurch gekennzeichnet, daß** das Element (14) an seiner Innenoberfläche (19) eine kapillarartige Struktur aufweist.

3. Vorrichtung nach einem oder beiden der Ansprüche 1 oder 2 **dadurch gekennzeichnet, daß** das Element (14) aus Kupfer und/oder Aluminium und/oder seinen Legierungen besteht.

4. Vorrichtung nach einem oder mehreren der Ansprüche 1 bis 3, **dadurch gekennzeichnet, daß** das Element (14) mit dem Teil (16), mit dem es in wärmeleitendem Kontakt mit dem Speichermedium (11) steht, im wesentlichen längs des Speichermediums (11) angeordnet ist.

5. Vorrichtung nach Anspruch 4, **dadurch gekennzeichnet, daß** das Element (14) mit dem Teil (16), mit dem es in wärmeleitendem Kontakt mit dem Speichermedium (11) steht, im Gehäuse (29) des Speichermediums (11) angeordnet ist.

6. Vorrichtung nach Anspruch 4, **dadurch gekennzeichnet, daß** das Element (14) mit dem Teil (16), mit dem es in wärmeleitendem Kontakt mit dem Speichermedium (11) steht, im Innenbereich (21) des Speichermediums (11) angeordnet ist.

7. Vorrichtung nach Anspruch 6, **dadurch gekennzeichnet, daß** das Element (14) mit dem Teil (16), mit dem es in wärmeleitendem Kontakt mit dem Speichermedium (11) steht, im Zentralbereich (22) des Speichermediums (11) angeordnet ist.

8. Vorrichtung nach einem oder mehreren der Ansprüche 1 bis 7, **dadurch gekennzeichnet, daß** das Element (14) als doppelwandiges Rohr ausgebildet ist, wobei in dem geschlossenen Raum (23) zwischen beiden Rohrwandungen (24, 25) das Wärmeübertragungsmedium (15) aufgenommen ist.

9. Vorrichtung nach Anspruch 8, **dadurch gekennzeichnet, daß** das Element (14) das Speichermedium (11) mit dem Teil (16), mit dem es mit diesem in wärmeleitendem Kontakt steht, im wesentlichen umschließt.

10. Vorrichtung nach einem oder mehreren der Ansprüche 1 bis 9, **dadurch gekennzeichnet, daß** das Element (14) an dem Teil (17), mit dem es in wärmeleitendem Kontakt mit dem Übertragungsbereich (18) für den Entzug und die Zuführung von Wärme (13) steht, wenigstens ein flächenvergrößerndes Element (26) aufweist.

11. Vorrichtung nach einem oder beiden der Ansprüche 6 oder 7, **dadurch gekennzeichnet, daß** das Element (14) an dem Teil (16), mit dem es in wärmeleitendem Kontakt mit dem Speichermedium (11) steht, wenigstens ein flächenvergrößerndes Element (27) aufweist.

## Claims

1. A device for charging and discharging hydrogen which may be taken up by a storage medium, particularly in the form of a metal hydride, heat being withdrawn from the storage medium for the procedure of charging with hydrogen and heat being supplied to the storage medium for the procedure of discharging the hydrogen, **characterized in that** one part (16) of at least one closed heat-transfer element (14), which is filled with a heat-transfer medium (15) and serves for heat transfer, is in heat-conducting contact with the storage medium (11), and one part (17) is in heat-conducting contact with a transfer region (18) for the withdrawal and supply of heat (13).

2. A device according to Claim 1, **characterized in that** the element (14) has a capillary-type structure on its inner surface (19).

3. A device according to one or both of Claims 1 and 2, **characterized in that** the element (14) is made of copper and/or aluminium and/or its alloys.

4. A device according to one or more of Claims 1 to 3, **characterized in that** the element (14) is arranged with the part (16) with which it is in heat-conducting contact with the storage medium (11) substantially along the storage medium (11).

5. A device according to Claim 4, **characterized in that** the element (14) is arranged with the part (16) with which it is in heat-conducting contact with the storage medium (11) in the housing (29) of the storage medium (11).

6. A device according to Claim 4, **characterized in that** the element (14) is arranged with the part (16) with which it is in heat-conducting contact with the storage medium (11) in the inner region (21) of the storage medium (11).

7. A device according to Claim 6, **characterized in that** the element (14) is arranged with the part (16) with which it is in heat-conducting contact with the storage medium (11) in the central region (22) of the storage medium (11).

8. A device according to one or more of Claims 1 to 7, **characterized in that** the element (14) is constructed as a double-walled pipe, the heat-transfer medium being received in the closed space (23) between both pipe walls (24, 25).

9. A device according to Claim 8, **characterized in that** the element (14) substantially surrounds the storage medium (11) by means of the part (16) with which it is in heat-conducting contact therewith.

10. A device according to one or more of Claims 1 to 9, **characterized in that** the element (14) has at least one area-enlarging element (26) on the part (17) with which it is in heat-conducting contact with the transfer region (18) for the withdrawal and supply of heat (13).

11. A device according to one or both of Claims 6 and 7, **characterized in that** the element has at least one area-enlarging element (27) on the part (16) with which it is in heat-conducting contact with the storage medium (11).

## Revendications

1. Dispositif pour le chargement et le déchargement d'hydrogène absorbable dans un fluide accumulateur, en particulier sous forme d'un hydrure métallique, dans lequel, pour l'opération de chargement en hydrogène, la chaleur est extraite du fluide accumulateur et, pour l'opération de déchargement de l'hydrogène, la chaleur est amenée au fluide accumulateur,. **caractérisé en ce qu'**au moins un élément caloporteur (14) fermé, rempli d'un fluide caloporteur (15), servant au transport de chaleur, est, pour une partie (16), en contact thermoconducteur avec le fluide accumulateur (11) et, pour une autre partie (17), en contact thermoconducteur avec une zone de transmission (18) pour l'extraction et l'amenée de chaleur (13).

2. Dispositif selon la revendication 1, **caractérisé en ce que** l'élément (14) présente une structure de type capillaire sur sa surface intérieure (19).

3. Dispositif selon l'une quelconque ou les deux revendications 1 et 2, **caractérisé en ce que** l'élément (14) est constitué de cuivre et/ou d'aluminium et/ou de ses alliages.

4. Dispositif selon l'une quelconque ou plusieurs des revendications 1 à 3, **caractérisé en ce que** l'élément (14) est disposé sensiblement le long du fluide accumulateur (11) avec la partie (16) avec laquelle il est en contact thermoconducteur avec le fluide accumulateur (11).

5. Dispositif selon la revendication 4, **caractérisé en ce que** l'élément (14) est disposé dans le boîtier (29) du fluide accumulateur (11) avec la partie (16) avec laquelle il est en contact thermoconducteur avec le fluide accumulateur (11).

6. Dispositif selon la revendication 4, **caractérisé en ce que** l'élément (14) est disposé dans la zone intérieure (21) du fluide accumulateur (11) avec la partie (16) avec laquelle il est en contact thermoconducteur avec le fluide accumulateur (11).

7. Dispositif selon la revendication 6, **caractérisé en ce que** l'élément (14) est disposé dans la zone centrale du fluide accumulateur (11) avec la partie (16) avec laquelle il est en contact thermoconducteur avec le fluide accumulateur (11).

8. Dispositif selon l'une quelconque ou plusieurs des revendications 1 à 7, **caractérisé en ce que** l'élément (14) est configuré comme un tube à double paroi, le fluide caloporteur (15) étant absorbé dans l'espace fermé (23) entre les deux parois de tube (24, 25).

9. Dispositif selon la revendication 8, **caractérisé en ce que** l'élément (14) entoure sensiblement le fluide accumulateur (11) avec la partie (16) avec laquelle il est en contact thermoconducteur avec celui-ci.

10. Dispositif selon l'une quelconque ou plusieurs des revendications 1 à 9, **caractérisé en ce que** l'élément (14) comprend au moins un élément agrandissant la surface (26) dans la partie (17) avec laquelle il est en contact thermoconducteur avec la zone de transmission (18) pour l'extraction et l'amenée de chaleur (13).

11. Dispositif selon l'une quelconque ou les deux revendications 6 et 7, **caractérisé en ce que** l'élément (14) comprend au moins un élément agrandissant la surface (27) dans la partie (16) avec laquelle il est en contact thermoconducteur avec le fluide accumulateur (11).
